# FASCICULE DE BREVET EUROPEEN

(11) **EP 0 366 182 B1**
(45) Date de publication et mention de la délivrance du brevet: **20.01.1993**
(21) Numéro de dépôt: 89202615.4
(22) Date de dépôt: 17.10.1989
(51) Int. Cl.: B09B 3/00, B09B 1/00, C01F 11/46, B01D 53/34

(54) **Procédé pour éliminer un résidu comprenant du sulfate de sodium**
Verfahren zur Entsorgung eines Natriumsulfat enthaltenden Rückstands
Method for the disposal of a residue containing sodium sulfate

(30) Priorité: 26.10.1988 FR 8814100
(43) Date de publication de la demande: 02.05.1990
(73) Titulaire: SOLVAY, B-1050 Bruxelles (BE)
(72) Inventeur: Ninane, Léon, F-54110 Dombasle-sur-Meurthe (FR)
(74) Mandataire: Anthoine, Paul

(56) Documents cités:
- EP-A- 0 005 301
- DE-A- 2 721 878
- DE-A- 3 411 998

## Description

L'invention a pour objet un procédé pour l'élimination des résidus industriels comprenant du sulfate de sodium.

Les activités humaines produisent de grandes quantités de résidus soufrés, qui sont nuisibles à l'écologie. Ainsi, la combustion des combustibles fossiles (houille, dérivés du pétrole), notamment dans les centrales thermiques de production d'électricité, conduit à la formation d'un volume important d'oxydes de soufre, dont le rejet dans l'atmosphère n'est généralement pas admissible.

Une technique connue et recommandée pour l'épuration des gaz de combustion en oxydes de soufre consiste à traiter ceux-ci avec du carbonate ou du bicarbonate de sodium (Chemical Marketing Reporter, July 7, 1986, pages 5 et 27 : "Sodium Chemicals Get Nod for Commercial FDG in '90' s"); les oxydes de soufre du gaz traité sont de la sorte convertis en sulfate de sodium, aisément séparable du gaz. Cette technique connue assure une épuration efficace des fumées industrielles en oxyde de soufre, mais elle conduit à la formation d'un résidu comprenant du sulfate de sodium, dont l'élimination présente des difficultés. La grande solubilité du sulfate de sodium dans l'eau interdit en effet son rejet tel quel sur un terril ou un crassier. Pour résoudre ces difficultés, on a songé à imperméabiliser le résidu contenant le sulfate de sodium, en y mélangeant des cendres volantes, de l'argile et de l'eau (ibidem). Ce procédé d'imperméabilisation présente toutefois l'inconvénient de nécessiter plusieurs matières premières différentes et il implique un appareillage complexe et coûteux. Il nécessite par ailleurs l'immobilisation d'aires d'épandage pour le stockage des résidus imperméabilisés en terril.

Selon le document EP-A-0 005 301, le gaz à épurer est traité avec du (bi)carbonate de sodium pour former du sulfite et du sulfate de sodium que l'on dissout dans de l'eau, et la solution aqueuse résultante est traitée avec du chlorure de calcium pour précipiter du sulfate de calcium dihydraté que l'on recueille. Le sulfate de calcium dihydraté ainsi recueilli est utilisé dans l'industrie du bâtiment ou rejeté.

Dans le document DE-A-3 411 998 on décrit un procédé pour éliminer un résidu solide, selon lequel on disperse ce résidu dans de l'eau et la dispersion aqueuse ainsi formée est envoyée dans une cavité souterraine d'un gisement de sel, de laquelle on soutire une solution aqueuse de chlorure de sodium.

L'invention vise à fournir un procédé nouveau, qui permet d'éliminer les résidus industriels contenant du sulfate de sodium, de manière facile et économique, sans nécessiter l'immobilisation d'une aire d'épandage, et qui conduit par ailleurs à l'obtention d'un produit industriel valorisable.

L'invention concerne dès lors un procédé pour éliminer un résidu industriel comprenant du sulfate de sodium, par traitement du sulfate de sodium avec un sel de calcium, le procédé étant caractérisé en ce qu'avant de traiter le sulfate de sodium avec le sel de calcium, on disperse le résidu dans de l'eau pour y dissoudre le-sulfate de sodium, on sépare de la dispersion aqueuse résultante une solution aqueuse de sulfate de sodium et on redroidit la solution pour cristalliser du sulfate de sodium décahydraté que l'on traite avec le sel de calcium, et en ce qu'on envoie le sulfate de calcium dans un gisement de sel gemme d'où l'on soutire simultanément une solution aqueuse de chlorure de sodium.

Dans le procédé selon l'invention, le sel de calcium doit être choisi parmi ceux qui sont capables de décomposer le sulfate de sodium en formant du sulfate de calcium. On donne la préférence au chlorure de calcium, de manière à produire du chlorure de sodium simultanément à la production du sulfate de calcium.

Dans le procédé selon l'invention, le traitement du sulfate de sodium du résidu avec le sel de calcium doit être opéré à une température réglée pour cristalliser du sulfate de calcium. En pratique, on préfère sélectionner une température pour laquelle on cristallise du sulfate de calcium dihydraté.

Le traitement du sulfate de sodium avec le sel de calcium est généralement opéré en milieu aqueux. Le taux de dilution du sulfate de sodium et du sel de calcium dans le milieu aqueux n'est pas critique, et sa valeur optimum peut être déterminée facilement par un travail de routine au laboratoire, en fonction des autres conditions opératoires.

Pour traiter le sulfate de sodium du résidu avec le sel de calcium, on peut par exemple disperser le résidu comprenant le sulfate de sodium à l'état solide dans une solution aqueuse ou une suspension aqueuse du sel de calcium. On peut aussi, en variante, disperser le résidu dans une quantité d'eau suffisante pour y dissoudre le sulfate de sodium, et mélanger ensuite le sel de calcium au milieu aqueux résultant. Dans cette variante du procédé, on peut éventuellement séparer les matières insolubles de la solution de sulfate de sodium, avant de traiter celle-ci avec le sel de calcium.

Le précipité de sulfate de calcium est ensuite envoyé dans un gisement de sel gemme, duquel on extrait simultanément une solution aqueuse de chlorure de sodium.

Tous moyens appropriés peuvent être utilisés pour introduire le précipité de sulfate de calcium dans le gisement de sel gemme et pour en extraire la solution aqueuse de chlorure de sodium. Un moyen communément exploité consiste à introduire le sulfate de calcium dans le gisement à l'état d'une suspension aqueuse dans de l'eau ou une saumure saturée ou diluée de chlorure de sodium. A cet effet, on peut avantageusement faire usage de la technique qui consiste à enfoncer deux canalisations dans le gisement de sel gemme, au voisinage l'une de l'autre (habituellement une canalisation tubulaire et une canalisation annulaire axiales), à injecter la suspension aqueuse de sulfate de calcium sous pression dans l'une des canalisations et à soutirer la solution aqueuse de chlorure de sodium par l'autre canalisation (Dale W. KAUFMANN, "Sodium Chloride", American Chemical Society Monograph Series, 1960, Reinhold Publishing Corporation, Chapman & Hall, Ltd., London, pages 142 à 185).

Dans une forme de réalisation particulière du procédé selon l'invention, le précipité de sulfate de calcium est envoyé dans le gisement de sel gemme avec une quantité d'eau suffisante pour y dissoudre un volume de sel gemme au moins égal au volume du sulfate de calcium. Dans cette forme de réalisation du procédé selon l'invention, la quantité d'eau mise en oeuvre est dès lors réglée pour former dans le gisement, par dissolution de sel gemme, une cavité de volume suffisant pour accueillir tout le sulfate de calcium qui y est envoyé et, le cas échéant, les autres substances insolubles du résidu.

Il peut arriver que le résidu industriel à éliminer contienne des substances solubles ou insolubles qu'il n'est pas recommandé de rejeter dans le gisement de sel gemme ou de retrouver dans la solution aqueuse de chlorure de sodium. A cet effet, dans une autre forme de réalisation particulière du procédé selon l'invention, on disperse le résidu industriel dans une quantité d'eau suffisante pour y dissoudre le sulfate de sodium, on recueille la solution aqueuse résultante après en savoir séparé, le cas échéant, les matières insolubles, on la refroidit dans des conditions réglées pour cristalliser du sulfate de sodium décahydraté, on recueille le précipité formé et on le traite avec le sel de calcium comme exposé plus haut. Dans cette forme de réalisation du procédé selon l'invention, le précipité de sulfate de calcium décahydraté présente une très grande pureté (KIRK-OTHMER - Encyclopedia of Chemical Technology - 3e édition - vol. 21 - John Wiley & Sons - 1983 - pages 247 à 249 (voir page 249)). Il est éventuellement associé à du carbonate de sodium décahydraté, si le résidu industriel soumis au procédé contient du carbonate ou du bicarbonate de sodium, comme c'est généralement le cas des résidus obtenus après la désulfuration d'un gaz de fumée avec du carbonate ou du bicarbonate de sodium. Cette forme de réalisation du procédé selon l'invention est spécialement recommandée dans le cas- de résidus industriels contaminés par des métaux lourds.

Dans une variante d'exécution de cette forme de réalisation du procédé selon l'invention, seule une fraction du précipité de sulfate de sodium décahydraté (éventuellement associé à du carbonate de sodium décahydraté) est traitée avec le sel de calcium en vue de son envoi dans le gisement de sel gemme. La fraction restante sert à traiter une saumure de chlorure de sodium contaminée par des cations calcium, pour précipiter ceux-ci à l'état de sulfate de calcium.

Dans une forme de réalisation préférée du procédé selon l'invention, le sel de calcium est du chlorure de calcium provenant du traitement, avec de l'hydroxyde de calcium, de l'eau mère du bicarbonate de sodium dans le procédé de fabrication de la soude à l'ammoniaque. Dans cette forme de réalisation du procédé selon l'invention, le traitement du sulfate de sodium avec le chlorure de calcium peut être réalisé en mélangeant au sulfate de sodium, une liqueur résiduaire d'une colonne de distillation de l'eau mère de la fabrication du bicarbonate de sodium par le procédé à l'ammoniaque. Des exemples de constitution de ces résidus, à l'état de suspensions aqueuses diluées, sont fournis dans le traité de TE-PANG HOU "Manufacture of Soda", seconde édition, Hafner Publishing Company, 1969, page 237, ainsi que dans la publication "The réhabilitation of the Solvay Process Waste Beds" de Frederick W. Boecker, B.S.C.E., Syracuse University, 1968, page 20. Cette forme de réalisation du procédé selon l'invention présente l'avantage de ne mettre en oeuvre que des résidus de l'industrie, que l'on élimine ensemble dans le gisement de sel gemme. Elle implique de mettre en oeuvre une quantité d'eau capable de dissoudre, dans le gisement, un volume de sel gemme au moins égal au volume global du sulfate de calcium et des matières insolubles de la liqueur résiduaire de la soudière. En variante, on peut soumettre la liqueur résiduaire à une filtration ou une décantation pour en éliminer au préalable les matières insolubles qu'elle contient.

Dans une autre forme de réalisation du procédé selon l'invention, on met en oeuvre du chlorure de calcium résiduaire de la fabrication de bicarbonate de sodium par la technique aux amines, telle qu'elle est décrite dans le brevet GB-A-1082436 (KAISER ALUMINUM & CHEMICAL CORPORATION) et dans les brevets et demandes de brevet BE-A-899490 et EP-A-148524 (SOLVAY & Cie).

Le procédé selon l'invention présente l'avantage de fournir un moyen facile, économique et fiable pour l'élimination d'un résidu industriel, sans nécessiter l'immobilisation d'une aire de stockage. Il présente l'avantage supplémentaire de produire une solution aqueuse de chlorure de sodium, qui peut être valorisée dans un procédé industriel.

Le procédé selon l'invention s'applique à tous les résidus industriels solides ou liquides, contenant du sulfate de sodium. Il trouve une application intéressante pour l'élimination des résidus solides du traitement de désulfuration des gaz contenant des oxydes de soufre au moyen de carbonate ou de bicarbonate de sodium. Il résout de manière avantageuse le problème de l'élimination de tels résidus, provenant du traitement des fumées des foyers industriels fonctionnant aux combustibles fossiles soufrés, notamment dans les centrales thermiques de production d'électricité.

Des particularités et détails de l'invention vont ressortir de la description suivante de quelques formes de réalisation, en référence aux dessins annexés.
La figure 1 est le schéma d'une installation mettant en oeuvre une première forme de réalisation du procédé selon l'invention;
La figure 2 est le schéma d'une installation couplant une forme de réalisation du procédé selon l'invention et un procédé de fabrication de bicarbonate de sodium;
La figure 3 est le schéma d'une seconde forme de réalisation du procédé selon l'invention.
La figure 4 est le schéma d'une installation mettant en oeuvre une troisième forme de réalisation du procédé selon l'invention.

Dans ces figures, des mêmes notations de référence désignent des éléments identiques.

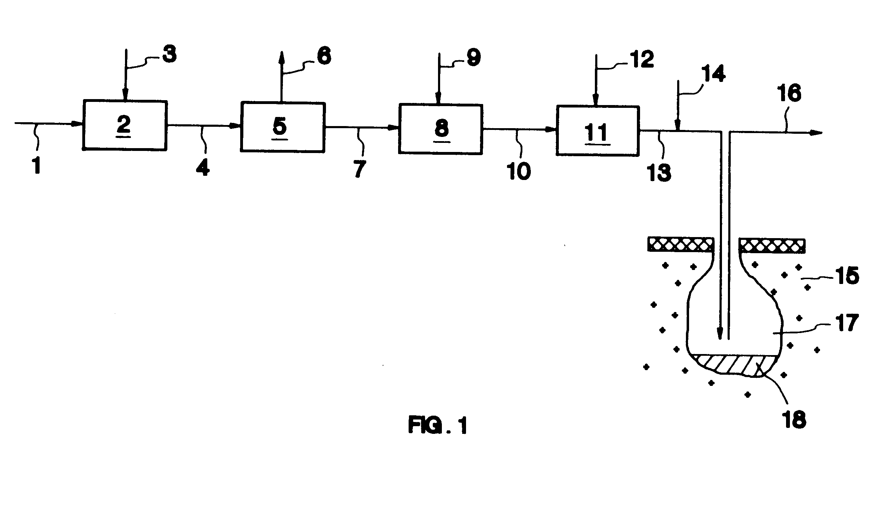

Dans les installations schématisées aux figures 1 à 3, le procédé selon l'invention est appliqué à l'élimination d'un résidu solide obtenu après désulfuration d'un gaz de fumée provenant de la combustion de houille ou d'un dérivé du pétrole. A cet effet, le gaz de fumée 1, contaminé par des oxydes de soufre, est introduit dans un réacteur 2 que l'on alimente par ailleurs avec du bicarbonate de sodium 3. Dans le réacteur 2, les oxydes de soufre de la fumée réagissent avec le bicarbonate de sodium en formant du sulfate de sodium. Le mélange réactionnel gazeux 4 que l'on extrait du réacteur 2 est envoyé dans une succession de filtres (comprenant avantageusement des filtres électrostatiques) 5, où on sépare un gaz 6 sensiblement exempt de poussières et un résidu solide pulvérulent 7. Celui-ci comprend du sulfate de sodium, du carbonate de sodium et des poussières habituellement présentes dans les gaz de combustion (cendres volantes, métaux lourds).

Le résidu 7 est traité conformément au procédé selon l'invention.

Dans la forme de réalisation du procédé selon l'invention, mise en oeuvre à la figure 1, le résidu solide 7 est introduit dans une chambre de dissolution 8, où on y additionne de l'eau 9 en quantité suffisante pour dissoudre la totalité du sulfate de sodium et du carbonate de sodium du résidu 7. Le mélange aqueux résultant 10 est envoyé dans une chambre de cristallisation 11 que l'on alimente par ailleurs avec une solution aqueuse de chlorure de calcium 12, en quantité suffisante pour décomposer le sulfate et le carbonate de sodium et former du sulfate de calcium et du carbonate de calcium qui précipitent, et du chlorure de sodium qui passe en solution aqueuse. On règle les conditions de pression et de température dans la chambre 11 pour que le sulfate de calcium y cristallise à l'état de dihydrate ou gypse, de préférence en structure aciculaire. On recueille de la chambre de cristallisation 11 un brouet aqueux 13 qui, après addition d'un complément d'eau 14, est introduit dans un gisement souterrain de sel gemme 15 duquel on soutire une solution aqueuse de chlorure de sodium 16.

L'eau non saturée du brouet aqueux 13 dissout le gisement de sel 15 en y ménageant une cavité 17 dans laquelle les matières insolubles du brouet (notamment le sulfate de calcium) sédimentent pour former un dépôt solide 18. Le complément d'eau 14 doit dès lors être réglé pour que le volume de sel gemme dissous et extrait du gisement avec la solution 16 soit au moins égal au volume des matières solides du brouet 13.

Dans une variante d'exécution du procédé qui vient d'être décrit, en référence à la figure 1, le mélange aqueux 10 est soumis une filtration, une décantation ou une centrifugation pour en extraire les substances non dissoutes avant de l'envoyer dans la chambre de cristallisation 11. Cette variante d'exécution du procédé réduit le volume de matières insolubles introduites dans le gisement; par voie de conséquence, elle nécessite un apport moindre d'eau 14 et réduit la vitesse de dissolution du gisement et le débit de la solution de chlorure de sodium 16 soutirée du gisement 15.

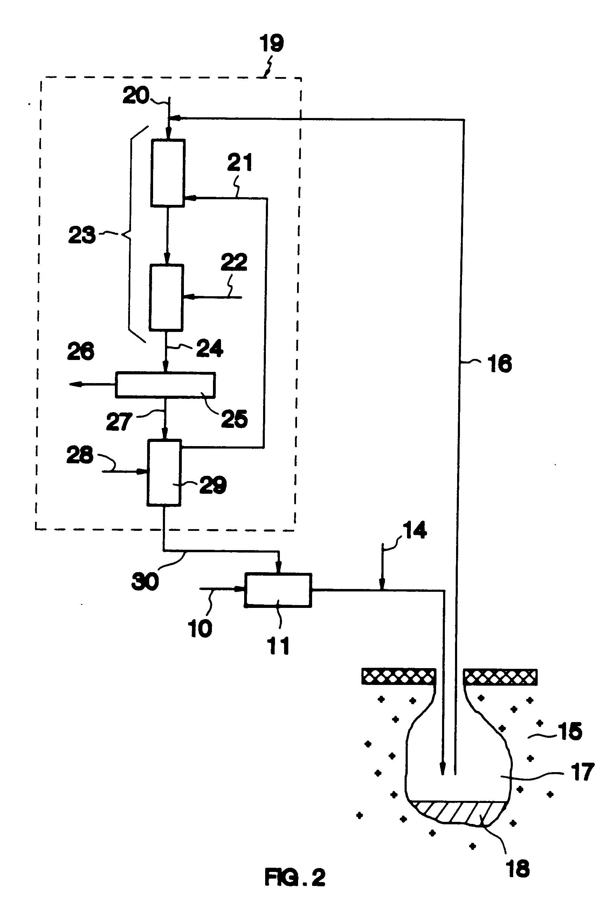

L'installation représentée à la figure 2 intègre le procédé selon l'invention à une soudière à l'ammoniaque 19. La soudière à l'ammoniaque est bien connue en technique (TE-PANG HOU "Manufacture of Soda, seconde édition, Hafner Publishing Company, 1969). Dans celle-ci, on fait réagir une solution aqueuse de chlorure de sodium 20, de l'ammoniac 21 et de l'anhydride carbonique 22 dans un ensemble 23 de réacteurs connus en soi, desquels on recueille un brouet aqueux 24 de bicarbonate de sodium. Par traitement du brouet 24 sur un filtre 25, on obtient du bicarbonate de sodium solide 26 que l'on valorise et une eau mère 27 que l'on traite avec une suspension aqueuse d'hydroxyde de calcium 28 dans un réacteur 29 comprenant une colonne de distillation alimentée avec de la vapeur d'eau. On recueille séparément du réacteur 29, d'une part, de l'ammoniac que l'on recycle 21 et, d'autre part, une liqueur résiduaire 30. Celle-ci est un brouet aqueux constitué, pour l'essentiel, d'une solution aqueuse saturée de chlorure de calcium et de chlorure de sodium contenant diverses substances en suspension (notamment du sulfate de calcium, du carbonate de calcium, de l'hydroxyde de magnésium, des oxydes de fer et de la silice).

Selon l'invention, la liqueur résiduaire 30 est introduite telle quelle dans la chambre de cristallisation 11 qui est par ailleurs alimentée avec le mélange aqueux 10 contenant le sulfate de sodium du résidu solide à éliminer.

Dans la forme de réalisation de la figure 2, le dépôt solide 18 qui se forme dans la cavité 17 du gisement de sel gemme 15 comprend les substances solides qui étaient en suspension dans la liqueur résiduaire 30. La solution aqueuse de chlorure de sodium 16 soutirée du gisement 15 est envoyée dans la soudière 19.

Dans une variante d'exécution du procédé schématisé à la figure 2, on soumet la liqueur résiduaire 30 à une filtration ou une décantation, de manière à n'envoyer dans la chambre 11 qu'une solution aqueuse de chlorure de sodium, sensiblement exempte de substance solide.

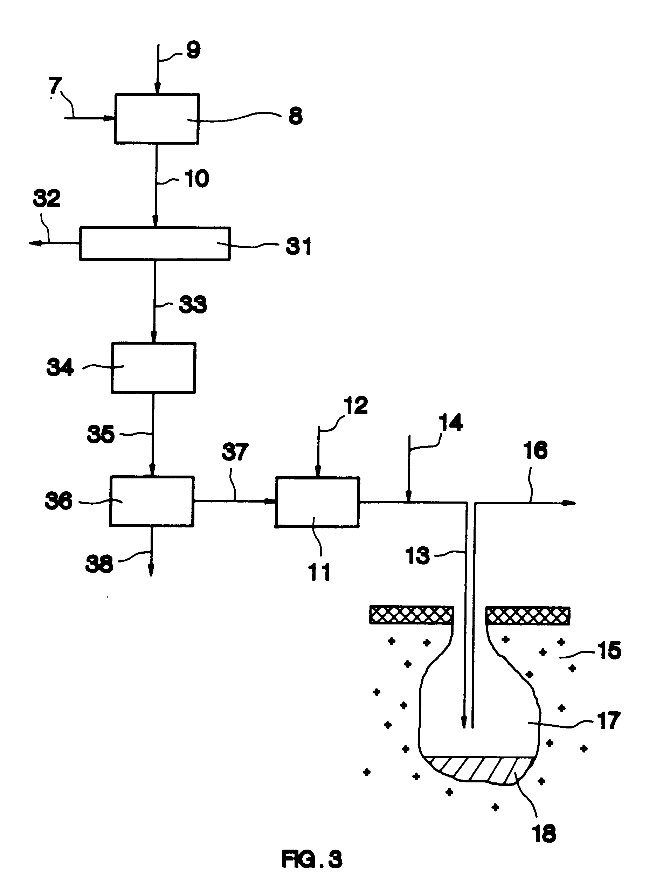

L'installation représentée à la figure 3 s'applique au traitement des résidus industriels solides qui contiennent des substances indésirables, que l'on ne souhaite pas retrouver dans le dépôt solide 18 du gisement de sel gemme, ni dans la solution aqueuse de chlorure de sodium 16 extraite du gisement. Des exemples de telles substances indésirables sont les métaux lourds présents en quantités variables dans certains combustibles.

Dans l'installation de la figure 3, le résidu solide 7 contenant du sulfate de sodium est d'abord dispersé dans de l'eau 9, dans un dissolveur 8 pour dissoudre le sulfate de sodium. La quantité d'eau et sa température sont réglées pour obtenir une dissolution de la totalité du sulfate de sodium du résidu 7. La suspension aqueuse résultante 10 est traitée sur un filtre 31 pour éliminer les matières insolubles 32. Le filtrat 33 est envoyé dans une chambre de cristallisation 34 où on le refroidit jusqu'à une température réglée, située entre -1°C et 32,4°C, pour critalliser du sulfate de sodium décahydraté et du carbonate de sodium décahydraté. On recueille de la chambre 34 un brouet aqueux 35 que l'on traite dans un dispositif d'essorage 36 pour séparer le précipité de sulfate de sodium décahydraté et de carbonate de sodium décahydraté 37 et une eau mère 38. Le précipité 37 est ensuite soumis à un traitement similaire à celui du milieu aqueux 10 dans l'installation de la figure 1. A cet effet, il est traité, dans une chambre de cristallisation 11, avec une solution aqueuse de chlorure de calcium 12, pour convertir le sulfate de sodium en sulfate de calcium et le carbonate de sodium en carbonate de calcium. Le brouet aqueux résultant 13 est ensuite envoyé dans le gisement de sel 15, avec un appoint d'eau 14. L'eau mère 38 peut, en variante, être recyclée dans la chambre de dissolution 8.

Dans une variante d'exécution du procédé qui vient d'être décrit, en référence à la figure 3, le filtrat 33 est traité en deux étapes consécutives, dans deux chambres de cristallisation successives, où on cristallise d'abord du sulfate de sodium décahydraté pur, que l'on recueille, puis un mélange de sulfate de sodium décahydraté et de carbonate de sodium décahydraté.

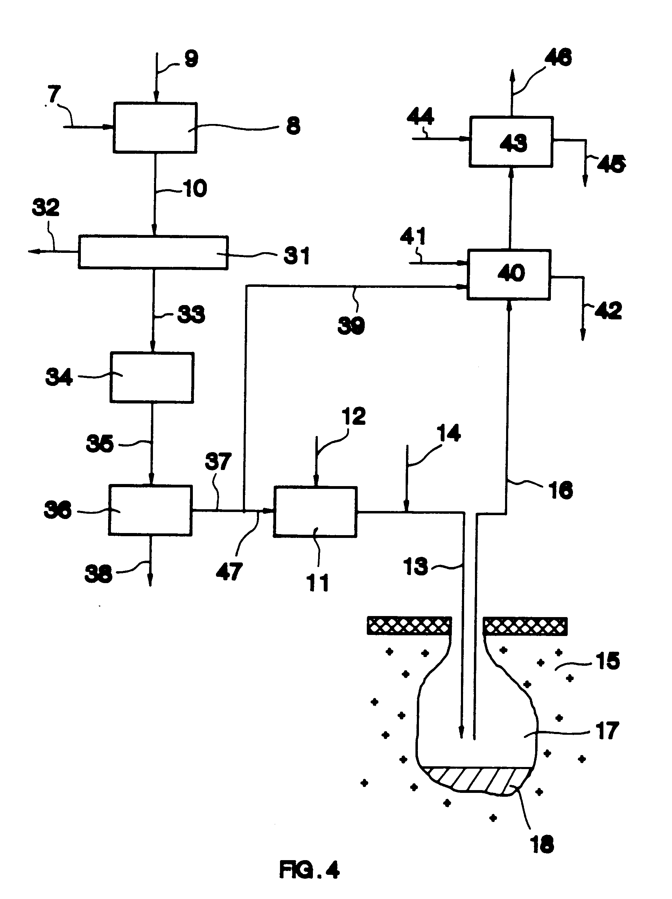

Dans l'installation représentée à la figure 4, le résidu solide 7 contenant du sulfate de sodium est traité comme dans l'installation de la figure 3, pour obtenir un coprécipité 37 de sulfate de sodium décahydraté et de carbonate de sodium décahydraté. Le précipité 37 est scindé en deux fractions 47 et 39. La fraction 47 est traitée, comme dans le cas de la figure 3, avec une solution aqueuse de chlorure de calcium 12 dans la chambre de cristallisation 11 pour précipiter un mélange de sulfate de calcium et de carbonate de calcium; le brouet aqueux résultant 13 est envoyé, avec un appoint d'eau 14, dans le gisement de sel gemme 15, d'où l'on extrait une solution aqueuse de chlorure de sodium 16. Celle-ci est généralement contaminée par des cations calcium et magnésium provenant du gisement de sel. Pour l'épurer en ces cations, la solution 16 est d'abord traitée dans un réacteur 40, avec la fraction 39 du précipité 37, pour précipiter les cations calcium à l'état de sulfate de calcium et de carbonate de calcium. On introduit en outre, dans le réacteur 40, de l'hydroxyde de sodium 41, pour précipiter les cations magnésium à l'état d'hydroxyde de magnésium. Après séparation des précipités 42, la solution aqueuse de chlorure de sodium est traitée, dans un second réacteur 43, avec du carbonate de sodium 44, pour parfaire son épuration en cations calcium, que l'on élimine à l'état d'un précipité 45 de carbonate de calcium. La solution de chlorure de sodium 46, recueillie du réacteur 43 peut être utilisée dans diverses industries, notamment pour la fabrication de carbonate de sodium par le procédé à l'ammoniaque, ou pour la fabrication de chlore par électrolyse. En particulier, l'installation de la figure 4 peut être intégrée à l'installation de la figure 2.

## Revendications

1. Procédé pour éliminer un résidu industriel comprenant du sulfate de sodium, selon lequel on traite le sulfate de sodium du résidu (7) avec un sel de calcium (12) pour précipiter du sulfate de calcium (13), caractérisé en ce qu'avant de traiter le sulfate de sodium avec le sel de calcium, on disperse le résidu (7) dans de l'eau (9) pour y dissoudre le sulfate de sodium, on sépare de la dispersion aqueuse résultante (10) une solution aqueuse de sulfate de sodium (33) et on refroidit la solution pour cristalliser du sulfate de sodium décahydraté (37) que l'on traite avec le sel de calcium (12), et en ce qu'on envoie le sulfate de calcium dans un gisement de sel gemme (15) d'où l'on soutire simultanément une solution aqueuse de chlorure de sodium (16).

2. Procédé selon la revendication 1, caractérisé en ce qu'on envoie le sulfate de calcium (13) dans le gisement (15) avec une quantité d'eau suffisante (14) pour y dissoudre un volume de sel gemme (17) au moins égal au volume du sulfate de calcium.

3. Procédé selon la revendication 1 ou 2, caractérisé en ce que le traitement du sulfate de sodium avec le sel de calcium (12) est opéré dans des conditions réglées pour cristalliser du sulfate de calcium dihydraté.

4. Procédé selon l'une quelconque des revendications 1 à 3, caractérisé en ce que le sel de calcium (12) est du chlorure de calcium.

5. Procédé selon la revendication 4, caractérisé en ce qu'on met en oeuvre du chlorure de calcium provenant d'une liqueur résiduaire (30) résultant du traitement avec de l'hydroxyde de calcium (28), de l'eau-mère (27) du bicarbonate de sodium (26) dans le procédé de fabrication de la soude à l'ammoniaque.

6. Procédé selon là revendication 5, caractérisé en ce qu'on mélange le sulfate de sodium (10) avec la liqueur résiduaire (30) et on envoie le mélange résultant dans le gisement (15).

7. Procédé selon l'une quelconque des revendications 1 à 6, caractérisé en ce qu'on met en oeuvre un résidu industriel (7) obtenu en désulfurant, avec du bicarbonate de sodium (3), un gaz (1) contenant des oxydes de soufre, résultant de la combustion d'un combustible fossile contenant du soufre.

8. Procédé selon la revendication 7, caractérisé en ce qu'on met en oeuvre une quantité de chlorure de calcium (12) suffisante pour convertir la totalité du sulfate de sodium et du carbonate de sodium résultant de la désulfuration, respectivement en sulfate de calcium et en carbonate de calcium.

9. Procédé selon la revendication 8, caractérisé en ce qu'on envoie le sulfate de calcium et le carbonate de calcium dans le gisement (15) avec une quantité d'eau (14) suffisante pour dissoudre un volume (17) du gisement de sel gemme (15) au moins égal au volume global du sulfate de calcium et du carbonate de calcium.

10. Procédé selon l'une quelconque des revendications 1 à 9, caractérisé en ce qu'on traite la solution aqueuse de chlorure de sodium (16) soutirée du gisement (15), avec une fraction (39) du sulfate de sodium décahydraté (37), pour précipiter les ions calcium de la solution à l'état de sulfate de calcium.

## Patentansprüche

1. Verfahren zur Entsorgung eines Natriumsulfat enthaltenden industriellen Rückstands, gemäß dem man das Natriumsulfat des Rückstandes (7) mit einem Calciumsalz (12) behandelt, um Calciumsulfat (13) auszufällen, dadurch gekennzeichnet, daß vor der Behandlung des Natriumsulfats mit dem Calciumsalz der Rückstand (7) in Wasser (9) dispergiert wird, um das Natriumsulfat darin zu lösen, aus der resultierenden wässrigen Dispersion (10) eine wässrige Natriumsulfatlösung (33) abgetrennt wird und die Lösung zum Kristallisieren von Natriumsulfatdecahydrat (37), das man mit Calciumsalz (12) behandelt, abgekühlt wird, und daß das Calciumsulfat in eine Steinsalz-Ablagerung (15) eingeleitet wird, von wo man gleichzeitig eine wässrige Natriumchloridlösung (16) entnimmt.

2. Verfahren nach Anspruch 1, dadurch gekennzeichnet, daß man das Calciumsulfat (13) in die Ablagerung (15) mit einer Menge Wasser (14) einleitet die genügt, um dort ein Volumen von Steinsalz (17) von wenigstens gleich dem Volumen des Calciumsulfats zu lösen.

3. Verfahren nach Anspruch 1 oder 2, dadurch gekennzeichnet, daß die Behandlung des Natriumsulfats mit dem Calciumsalz (12) unter kontrollierten Bedingungen durchgeführt wird, um Calciumsulfatdihydrat zu kristallisieren.

4. Verfahren nach einem der Ansprüche 1 bis 3, dadurch gekennzeichnet, daß das Calciumsalz (12) Calciumchlorid ist.

5. Verfahren nach Anspruch 4, dadurch gekennzeichnet, daß man Calciumchlorid einsetzt, das aus einer Restflüssigkeit (30) stammt, die aus der Behandlung von Mutterlauge (27) des Natriumbicarbonats (26) in dem Solvaysoda-Verfahren mit Calciumhydroxyd (28) resultiert.

6. Verfahren nach Anspruch 5, dadurch gekennzeichnet, daß man das Natriumsulfat (10) mit der Restflüssigkeit (30) mischt und die resultierende Mischung in die Ablagerung (15) einleitet.

7. Verfahren nach einem der Ansprüche 1 bis 6, dadurch gekennzeichnet, daß man einen beim Entschwefeln eines Schwefeloxyde enthaltenden Gases (1), das aus der Verbrennung eines Schwefel enthaltenden, fossilen Brennstoffes stammt, mit Natriumbicarbonat (3) erhaltenen Industrierückstand (7) einsetzt.

8. Verfahren nach Anspruch 7, dadurch gekennzeichnet, daß man eine Menge an Calciumchlorid (12) einsetzt, die genügt, um das gesamte aus der Entschwefelung stammende Natriumsulfat und Natriumcarbonat in Calciumsulfat bzw. Calciumcarbonat umzuwandeln.

9. Verfahren nach Anspruch 8, dadurch gekennzeichnet, daß man das Calciumsulfat und das Calciumcarbonat in die Ablagerung, (15) mit einer Menge Wasser (14) einleitet, die genügt, um ein Volumen (17) aus der Steinsalz-Ablagerung (15) zu lösen, das wenigstens gleich dem Gesamtvolumen des Calciumsulfats und des Calciumcarbonats entspricht.

10. Verfahren nach einem der Ansprüche 1 bis 9, dadurch gekennzeichnet, daß man die aus der Ablagerung (15) entnommene wässrige Natriumchloridlösung (16) mit einem Anteil (39) des Natriumsulfatdecahydrats (37) behandelt, um die Calciumionen der Lösung im Zustand von Calciumsulfat auszufällen.

## Claims

1. Process for removing an industrial residue containing sodium sulphate, according to which the sodium sulphate in the residue (7) is treated with a calcium salt (12) to precipitate calcium sulphate (13) characterised in that, before the sodium sulphate is treated with the calcium salt, the residue (7) is dispersed in water (9) to dissolve the sodium sulphate therein, an aqueous solution of sodium sulphate (33) is separated from the resulting aqueous dispersion (10), and the solution is cooled to crystallise sodium sulphate decahydrate (37), which is treated with the calcium salt (12) and in that the calcium salt is sent to a rock salt deposit (15) from which an aqueous solution of sodium chloride (16) is simultaneously withdrawn.

2. Process according to Claim 1, characterised in that the calcium sulphate (13) is sent to the deposit (15) with a sufficient quantity of water (14) to dissolve therein a volume of rock salt (7) which is at least equal to the volume of the calcium sulphate.

3. Process according to Claim 1 or 2, characterised in that the treatment of the sodium sulphate with the calcium salt (12) is carried out in conditions which are adjusted to crystallise calcium sulphate decahydrate.

4. Process according to any one of Claims 1 to 3, characterised in that the calcium salt (12) is calcium chloride.

5. Process according to Claim 4, characterised in that the calcium chloride employed originates from a residual liquor (30) resulting from the calcium hydroxide treatment (28) of the mother liquor (27) of sodium bicarbonate (26) in the ammonia-soda process.

6. Process according to Claim 5, characterised in that sodium sulphate (10) is mixed with the residual liquor (30) and the resulting mixture is sent to the deposit (15).

7. Process according to any one of Claims 1 to 6, characterised in that an industrial residue (7) which is employed is obtained by desulphurising with sodium bicarbonate (3) a gas (1) containing sulphur oxides, resulting from the burning of a fossil fuel which contains sulphur.

8. Process according to Claim 7, characterised in that a quantity of calcium chloride (12) is employed which is sufficient to convert all the sodium sulphate and the sodium carbonate resulting from the desulphurisation into calcium sulphate and calcium carbonate respectively.

9. Process according to Claim 8, characterised in that the calcium sulphate and the calcium carbonate are sent to the deposit (15) with a quantity of water (14) which is sufficient to dissolve a volume (17) of the rock salt deposit (15) which is at least equal to the total volume of the calcium sulphate and of the calcium carbonate.

10. Process according to any one of Claims 1 to 9, characterised in that the aqueous solution of sodium chloride (16) withdrawn from the deposit (15) is treated with a fraction (39) of the sodium sulphate decahydrate (37) to precipitate the calcium ions in the solution in the form of calcium sulphate.
